# EUROPEAN PATENT APPLICATION

(11) **EP 4 517 334 A1**
(43) Date of publication of application: **05.03.2025**
(21) Application number: 23795921.8
(22) Date of filing: 08.03.2023
(51) Int. Cl.: G01N 35/10

(54) **AUTOMATIC ANALYSIS DEVICE AND CONTROL METHOD THEREFOR**

(30) Priority: 27.04.2022 JP 2022073443
(71) Applicant: HITACHI HIGH-TECH CORPORATION, Tokyo 105-6409 (JP)
(72) Inventor: MATSUOKA Shinya, Tokyo 105-6409 (JP); ITO Mayuko, Tokyo 105-6409 (JP); SUZUKI Iwao, Tokyo 105-6409 (JP)
(74) Representative: MERH-IP Matias Erny Reichl Hoffmann Patentanwälte PartG mbB
(86) International application number: PCT/JP2023/008876
(87) International publication number: WO 2023/210174

(57) **Abstract**

The present invention provides an automatic analyzer and a method for controlling the automatic analyzer that copes with various sample containers while reducing a possibility of air aspiration. An operation cycle of the automatic analyzer includes a lowering step of lowering a probe into a liquid such that a distance from a liquid level of the liquid in a container to a tip end of the probe is a first predetermined value, an aspiration step of aspirating the liquid by a first variable aspiration amount, and a raising step of raising the probe such that the tip end of the probe is separated from the liquid level. In a container having the largest liquid level lowering amount, when the liquid is aspirated by the first variable aspiration amount, the tip end of the probe remains in the liquid, and a distance from a liquid level after the aspiration to the tip end of the probe is equal to or larger than a second predetermined value. In the raising step, the probe is raised such that a distance from the tip end of the probe to a liquid level after the raising is equal to or larger than a third predetermined value in a container having the smallest liquid level lowering amount.

## Description

### Technical Field

The present invention relates to an automatic analyzer and a method for controlling the automatic analyzer.

### Background Art

Analysis of a liquid sample including a biological sample such as blood is conducted by performing processing of aliquoting a predetermined amount of a sample and appropriately mixing the sample with an appropriate amount of a reagent, and then performing measurement by a measurement unit such as a photometer. An automatic analyzer, in which the process is automated and is performed until an analysis result is output, is used in a medical inspection.

In aliquoting the sample, a tip end of a probe is immersed in the liquid sample held in a sample container by a certain amount, and the sample is aspirated by a pressure of a syringe pump connected via a pipe. At this time, since the shape of the sample container is not the same and the amount of the liquid sample held inside is not the same, a height of a liquid level of the sample differs for each sample container. Therefore, in general, a technique of detecting the height of the liquid level and controlling an immersion amount of the tip end of the probe is used in order to prevent no-load aspiration of the sample and excessive immersion of the tip end of the probe.

For example, PTL 1 discloses a technique in which "when a pipette 4 is separated from a sample liquid level during aspiration of a sample liquid, a quantification unit 13 immediately stops an aspiration operation of a syringe 9. Thereafter, the pipette 4 is lowered to contact the sample liquid level by a drive device 7, and the syringe 9 resumes the aspiration operation. Hereafter, the above operations are repeated until the sample is aspirated by a predetermined amount" (see Abstract).

### Citation List

### Patent Literature

PTL 1: JP2002-243749A

### Summary of Invention

### Technical Problem

In sample aliquoting, a lowering speed of the liquid level at the time of sample aspiration differs depending on the sample container. The liquid level lowering is faster in a thin container, and is slower in a thick container. When a cross-sectional area changes in a conical shape, the liquid level lowering speed also depends on an aspiration position.

When aspirating a sample, it is necessary to achieve both two points: (1) the tip end of the probe is not separated from the liquid level in order to prevent foam aspiration, and (2) the tip end of the probe is not excessively pushed into the liquid level in order to prevent probe contamination.

In order to achieve the above, in the related art, when a certain amount of liquid is aspirated, the probe is additionally lowered. However, when the amount of a sample to be aspirated is large, it is not possible to determine a common additional lowering condition for simultaneously achieving the above (1) and (2) between sample containers having different liquid level lowering speeds, and individual control corresponding to the sample container is required.

A case where it is not possible to know in advance which type of sample container is to come and a case where the amount of sample contained in a sample container is not known in advance are conceivable. Therefore, it is desirable that control of lowering the probe is common regardless of the sample container.

In a case where a probe pushing amount is reduced and the probe is additionally lowered when the probe is separated from the liquid level due to the aspiration as in Patent Literature 1, there are problems that air is aspirated into the probe during a time lag between detection of separation from the liquid level and stop of the aspiration, and the sample itself is foamed due to intake of air or the sample scatters at the time of discharge.

Therefore, an object of the present disclosure is to provide a probe control technique coping with various sample containers while reducing a possibility of air aspiration.

### Solution to Problem

An example of a method according to the present invention is a method for controlling an automatic analyzer that aspirates a liquid in a container using a probe, the method including:
a step of executing an operation cycle, wherein
the operation cycle is executed twice or more,
the operation cycle includes
   a lowering step of lowering the probe into the liquid such that a distance from a liquid level of the liquid in the container to a tip end of the probe is a first predetermined value,
   an aspiration step of aspirating the liquid by a first variable aspiration amount after the lowering step, and
   a raising step of raising the probe such that the tip end of the probe is separated from the liquid level after the aspiration step.
The present specification includes disclosure contents of Japanese Patent Application No. 2022-073443 which are the basis of the priority of the present application.

### Advantageous Effects of Invention

According to the automatic analyzer and the method for controlling the automatic analyzer according to the present invention, a probe control technique coping with various sample containers is provided while reducing a possibility of air aspiration.

### Brief Description of Drawings

[FIG. 1] FIG. 1 is a diagram showing an example of an overall configuration of an automatic analyzer 100 according to a first embodiment.
[FIG. 2] FIG. 2 shows a configuration around a sample aliquoting probe 105a of the automatic analyzer 100.
[FIG. 3] FIG. 3 is a flowchart showing a method for controlling the automatic analyzer 100 according to the present embodiment.
[FIG. 4] FIG. 4 is a diagram showing an operation example of the sample aliquoting probe 105a according to the method shown in FIG. 3.
[FIG. 5] FIG. 5 shows an example of a method for determining a first predetermined value.
[FIG. 6] FIG. 6 shows a specific example of a first variable aspiration amount in each normal operation cycle.
[FIG. 7] FIG. 7 shows a specific example of a method for determining the first variable aspiration amount.
[FIG. 8] FIG. 8 shows a specific example of a first variable aspiration amount in each operation cycle according to a second embodiment.
[FIG. 9] FIG. 9 shows a specific example of a first variable aspiration amount in each operation cycle according to a third embodiment.

### Description of Embodiments

Hereinafter, embodiments of the invention will be described with reference to the drawings.

### [First Embodiment]

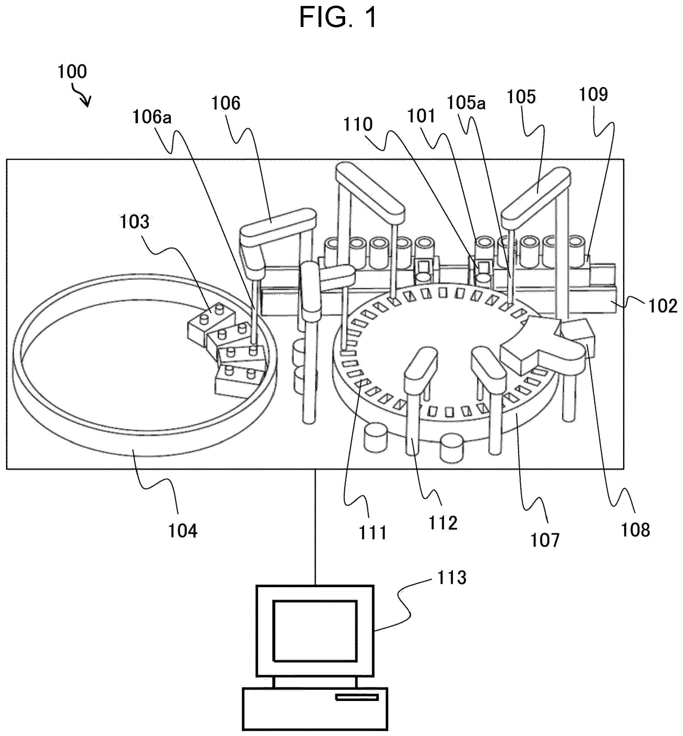

An example of an overall configuration of an automatic analyzer 100 according to a first embodiment will be described with reference to FIG. 1. The automatic analyzer 100 includes a sample conveyance unit 102, a reagent disk 104, a sample aliquoting unit 105, a reagent aliquoting unit 106, a reaction disk 107, a measurement unit 108, a cleaning tank 110, and a control device 113. Hereinafter, each unit will be described.

The sample conveyance unit 102 conveys a sample container 101, which contains a sample (liquid) such as blood or urine and is placed on a sample rack 109, to a position where the sample aliquoting unit 105 can access the sample container 101.

The sample aliquoting unit 105 aliquots the sample from the sample container 101, which is conveyed by the sample conveyance unit 102, to a reaction vessel 111 disposed on the reaction disk 107. For aliquoting the sample, a sample aliquoting probe 105a provided in the sample aliquoting unit 105 is used. For convenience of illustration, a shape of the sample aliquoting probe 105a is partially omitted and may be different from the shape shown in another drawing.

The sample aliquoting probe 105a is inserted into the sample container 101 to aspirate the sample, and then moves to the reaction vessel 111 to discharge the sample. As described, the automatic analyzer 100 includes the sample aliquoting probe 105a and aspirates the sample in the sample container 101 using the sample aliquoting probe 105a.

The reaction disk 107 retains heat of a plurality of reaction vessels 111 arranged around the circumference in a predetermined temperature range and conveys the reaction vessel 111, into which the sample is aliquoted, to a position where the reagent aliquoting unit 106 can access the reaction vessel 111. The reagent disk 104 stores a reagent container 103, in which a reagent (liquid) used for analysis is contained, in a predetermined temperature range.

The reagent aliquoting unit 106 aliquots the reagent from the reagent container 103 stored in the reagent disk 104 to the reaction vessel 111 in which the sample is aliquoted. For aliquoting the reagent, a reagent aliquoting probe 106a provided in the reagent aliquoting unit 106 is used. That is, the reagent aliquoting probe 106a is inserted into the reagent container 103 to aspirate the reagent, and then moves to the reaction vessel 111 to discharge the reagent.

The reaction vessel 111, in which the sample and the reagent are aliquoted, is conveyed by the reaction disk 107 to a position where a stirring unit 112 can access the reaction vessel 111. The stirring unit 112 stirs the sample and the reagent in the reaction vessel 111. The reaction between the sample and the reagent in the reaction vessel 111 is promoted by heat retention performed by the reaction disk 107 and stirring performed by the stirring unit 112, and a reaction liquid is produced. The reaction disk 107 conveys the reaction vessel 111 containing the reaction liquid to the measurement unit 108.

The measurement unit 108 measures a physical property of the reaction liquid contained in the reaction vessel 111, for example, the amount of light emission, the amount of scattered light, the amount of transmitted light, a current value, a voltage value, and the like. The physical property to be measured is not limited to thereto. The physical property measured by the measurement unit 108 is transmitted to the control device 113.

The control device 113 is a device that receives the physical property transmitted from the measurement unit 108 and outputs an analysis result, and controls each unit provided in the automatic analyzer 100, and is implemented by, for example, a so-called computer.

The sample aliquoting probe 105a of the sample aliquoting unit 105 and the reagent aliquoting probe 106a of the reagent aliquoting unit 106 are cleaned using a cleaning liquid in the cleaning tank 110 after aliquoting the sample and the reagent. As the cleaning liquid, a highly volatile solution such as an organic solvent, an alkaline solution, a neutral solution containing a surfactant, or the like is used. In this way, the cleaning tank 110 functions as a cleaning device for cleaning the sample aliquoting probe 105a and the reagent aliquoting probe 106a, thereby restricting the occurrence of contamination.

An operation when the automatic analyzer 100 aspirates a liquid (sample or reagent) will be described below. Hereinafter, a case of aspirating the sample in the sample container 101 using the sample aliquoting probe 105a will be described as an example, and a case of aspirating the reagent in the reagent container 103 using the reagent aliquoting probe 106a is also applicable.

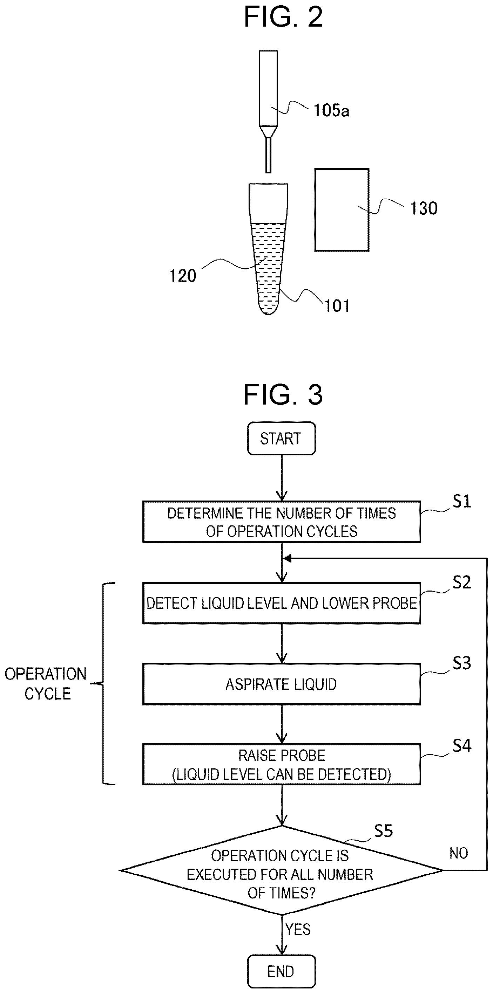

FIG. 2 shows a configuration around the sample aliquoting probe 105a of the automatic analyzer 100. The sample container 101 is fixedly supported by a support means (not shown) of the automatic analyzer 100. A sample 120 is contained in the sample container 101. The sample aliquoting probe 105a is open downward (for example, vertically downward).

The automatic analyzer 100 can move the sample aliquoting probe 105a up and down (for example, up and down in a vertical direction), whereby an opening tip end of the sample aliquoting probe 105a can be immersed in the sample 120. A pipe and an aspiration unit (syringe pump or the like) (not shown) are connected to the sample aliquoting probe 105a, and the sample 120 can be aspirated. As described, the automatic analyzer 100 can aspirate the sample 120 in the sample container 101 by using the sample aliquoting probe 105a.

The automatic analyzer 100 includes a liquid level detection device 130. The liquid level detection device 130 is provided in association with the sample container 101, and can detect a position (for example, a height position) of a liquid level of the sample 120 in the sample container 101. Accordingly, it is possible to control an operation of the sample aliquoting probe 105a described later. The liquid level detection device 130 may have a known configuration. For example, a liquid level detection device of a capacitance type, an optical type, an ultrasonic type, or the like can be used.

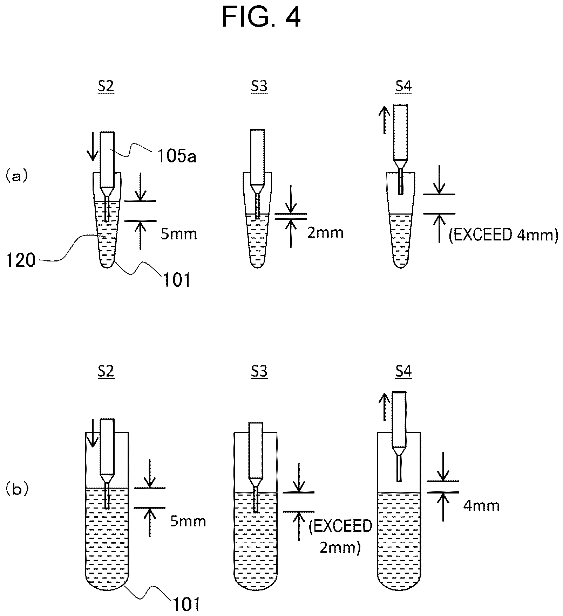

FIG. 3 is a flowchart showing a method for controlling the automatic analyzer 100 according to the present embodiment. FIG. 4 is a diagram showing an operation example of the sample aliquoting probe 105a according to the control method.

The control method in FIG. 3 is a control method for aspirating the sample 120 (liquid) in the sample container 101 by using the sample aliquoting probe 105a. The control method is executed by the automatic analyzer 100, for example, under the control of the control device 113.

The control method includes a predetermined operation cycle including steps S2 to S4. The operation cycle is, for example, a normal operation cycle or a correction operation cycle described later. The control method includes step S1 of determining the number of executions (the number of repetitions) of the operation cycle and the normal operation cycle. The operation cycle can be repeatedly executed a plurality of times. In particular, the normal operation cycle can be executed once or a plurality of times. Since the execution of the operation cycle is controlled by the control device 113, manual operation by a user of the automatic analyzer is not required and the work is efficiently performed.

The automatic analyzer first determines the number of executions of the normal operation cycle when aspirating a liquid (step S1, number-of-times determination step). A specific method of determining the number of times will be described later.

In the normal operation cycle, the automatic analyzer detects a liquid level position of the liquid in the sample container 101, and lowers the sample aliquoting probe 105a into the liquid such that a distance (pushing amount) from the liquid level to the tip end of the sample aliquoting probe 105a is a predetermined value (first predetermined value) (step S2, lowering step).

As shown in FIG. 4, a plurality of types of sample containers 101 having different shapes and sizes can be used in the automatic analyzer 100. (a) of FIG. 4 shows a microcup that is an example of the sample container 101, and (b) of FIG. 4 shows a Φ16 tube that is another example of the sample container 101. Thus, in the automatic analyzer 100, the sample container 101 is not limited.

A diameter of the microcup in (a) of FIG. 4 is smaller than that of the Φ16 tube. Therefore, when the same amount of liquid is to be aspirated, a liquid level lowering amount in the microcup is larger than a liquid level lowering amount in the Φ16 tube. The diameter of the Φ16 tube is fixed at a fixed value (for example, 16 mm), and the diameter of the microcup changes depending on a depth position. Therefore, when the same amount of liquid is aspirated in the microcup, the liquid level lowering amount changes depending on the liquid level position before aspiration.

In step S2, the pushing amount (first predetermined value) is 5 mm in both cases of (a) and (b) of FIG. 4. The pushing amount can be determined based on any criterion, and an example of the criterion will be described below.

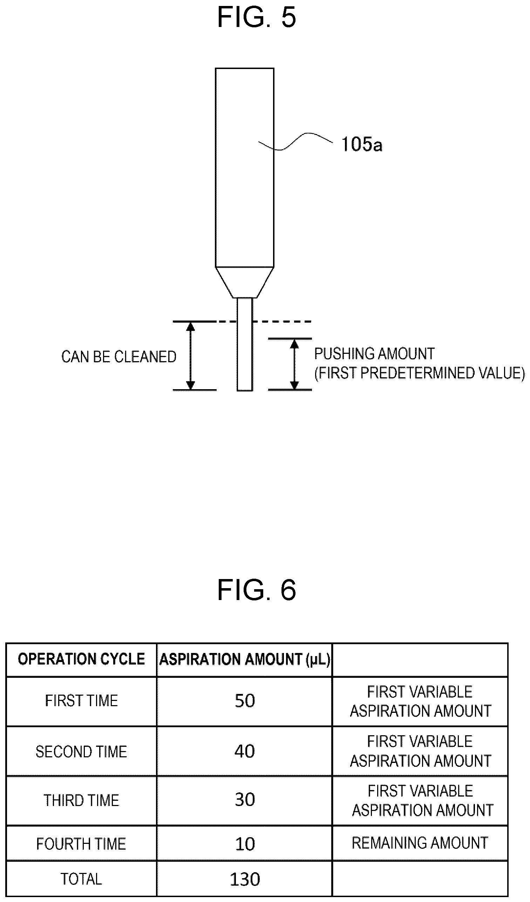

FIG. 5 shows an example of a method for determining the first predetermined value. The first predetermined value can be determined to a value at which a range in which an outer wall of the sample aliquoting probe 105a comes into contact with the sample 120 (for example, a range within a first predetermined value from the tip end of the sample aliquoting probe 105a) falls within a range in which the sample aliquoting probe is cleanable in the cleaning tank 110 (see FIG. 1) of the automatic analyzer 100. Within such a range, it is possible to appropriately clean the liquid adhering to the outer wall of the sample aliquoting probe 105a after liquid aspiration.

Returning to FIG. 3, after step S2, the automatic analyzer aspirates the liquid by a predetermined aspiration amount (first variable aspiration amount) by using the sample aliquoting probe 105a (step S3, aspiration step). The aspiration amount in step S3 may be changed for each normal operation cycle.

FIG. 6 shows a specific example of the first variable aspiration amount for each normal operation cycle. FIG. 6 shows an example of a case in which a liquid of 130 µL is aspirated from a microcup, and it is assumed that a sufficient amount of liquid (for example, 200 µL) is contained in the microcup before aspiration.

In this example, the first variable aspiration amount varies depending on an execution state of the normal operation cycle. The first variable aspiration amount is calculated such that the tip end of the sample aliquoting probe 105a remains at a sufficient depth from the liquid level after liquid aspiration regardless of the type of the sample container 101.

Specifically, the first variable aspiration amount is a value calculated such that, when a liquid is aspirated by the first variable aspiration amount in a container (for example, a microcup) having the largest liquid level lowering amount among the sample containers 101 usable in the automatic analyzer, the tip end of the sample aliquoting probe 105a stays in the liquid and a distance from the liquid level after the aspiration to the tip end of the sample aliquoting probe 105a is equal to or larger than a predetermined remaining pushing amount (second predetermined value. In the example in (a) of FIG. 4, the value is 2 mm). In the present embodiment, the second predetermined value can be determined to be the same value in all normal operation cycles. By ensuring the remaining pushing amount in this way, it is possible to prevent the air from being unexpectedly aspirated due to liquid shaking or the like.

Specific values of the first variable aspiration amount and the second predetermined value can be appropriately determined in advance based on the shapes, sizes, and the like of all the containers that can be used in the automatic analyzer. More specifically, a function can be defined in advance based on the position (height) of the liquid level and the shape of the container (microcup in the present embodiment).

In the example in FIG. 6, the aspiration of a necessary amount is completed in four operation cycles. When aspirating a larger amount or a smaller amount, more or less operation cycles may be defined.

The second predetermined value (2 mm in the example in (a) of FIG. 4) can be designed to a value at which the tip end of the sample aliquoting probe 105a remains in the liquid after aspiration with a margin. When a cross-sectional area of the sample container 101 changes like in a microcup (for example, when the diameter at a deeper position is smaller in a conical shape), the first variable aspiration amount may change according to the liquid level position. Further, when the container having the largest liquid level lowering amount among the sample containers 101 differs according to the liquid level position, the first variable aspiration amount may be changed according to a combination of the sample container 101 and the liquid level position.

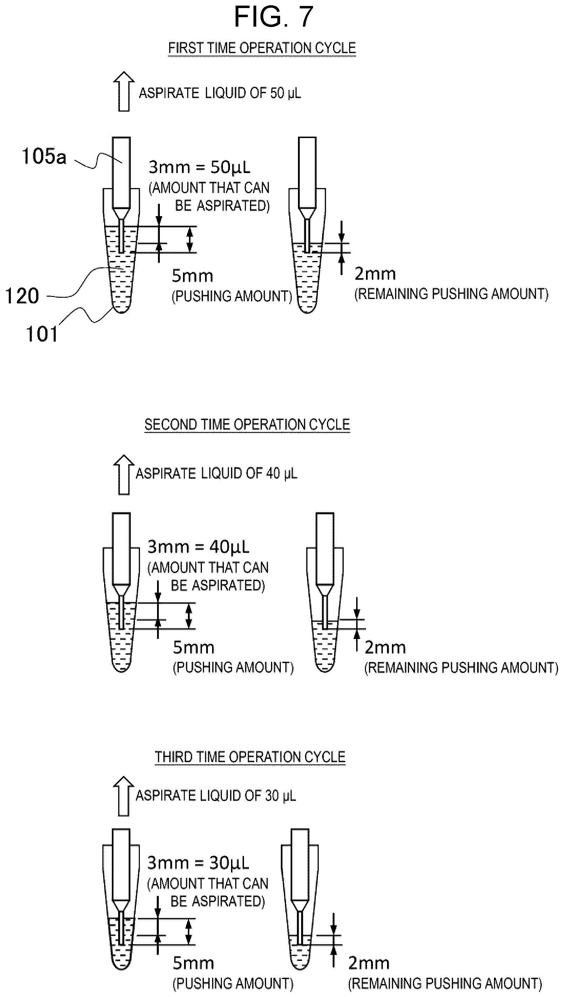

FIG. 7 shows a specific example of a method for determining the first variable aspiration amount. In this example, it is assumed that the pushing amount (first predetermined value) is determined to be 5 mm and the remaining pushing amount (second predetermined value) is determined to be 2 mm. That is, the liquid can be aspirated by a volume corresponding to a height of 3 mm in one operation cycle.

In a first operation cycle, the liquid level is at a relatively high position, and the cross-sectional area of the sample container 101 in the vicinity of the liquid level is relatively large. Therefore, 50 µL can be aspirated while the liquid level lowers by 3 mm. In a second operation cycle, the liquid level lowers, and the cross-sectional area of the sample container 101 slightly decreases. Therefore, only 40 µL can be aspirated while the liquid level lowers by 3 mm. In a third operation cycle, the liquid level further lowers, and the cross-sectional area of the sample container 101 further decreases. Therefore, only 30 µL can be aspirated while the liquid level lowers by 3 mm.

As described, as the aspiration proceeds, the cross-sectional area decreases and a lowering speed of the liquid level increases. Therefore, a first variable amount is designed to decrease accordingly.

By determining the first predetermined value, the second predetermined value, and the first variable aspiration amount as described above, a probe control technique coping with various containers is implemented while reducing a possibility of air aspiration.

In the example in (b) of FIG. 4, since the diameter of the sample container 101 is larger than that in the example in (a) of FIG. 4, a distance from the liquid level after aspiration to the tip end of the sample aliquoting probe 105a exceeds 2 mm, but it is unnecessary to accurately measure the distance in this case.

Returning to FIG. 3, after step S3, the automatic analyzer raises the sample aliquoting probe 105a such that the tip end of the sample aliquoting probe 105a is separated from the liquid level (step S4, raising step). A raising distance at this time can be determined in advance as a value independent of the sample container 101 and the liquid level position.

In step S4, the sample aliquoting probe 105a is raised such that a distance from the tip end of the sample aliquoting probe 105a to the liquid level after the raising is equal to or larger than a third predetermined value (4 mm in the example in (b) of FIG. 4) in a container (for example, Φ16 tube) having the smallest liquid level lowering amount among the sample containers 101 usable in the automatic analyzer. The third predetermined value is a value serving as a margin for reliably separating the tip end of the sample aliquoting probe 105a from the liquid level in step S4 in order to correctly detect the position of the liquid level by the liquid level detection device after step S4. In this way, by separating the sample aliquoting probe 105a from the liquid level with a certain margin, it is possible to more accurately measure the liquid level position.

In the example in (a) of FIG. 4, since the diameter of the sample container 101 is smaller and the lowering amount of the liquid level is larger, the distance from the liquid level after the aspiration to the tip end of the sample aliquoting probe 105a exceeds 4 mm, but it is unnecessary to accurately measure the distance in this case.

In this way, one normal operation cycle ends.

An example of a method for determining the number of executions (the number of repetitions) of the operation cycle in step S1 will be described below. As shown in FIG. 6, the number of executions is determined based on the first variable aspiration amount and a total amount (designated aspiration amount) required to aspirate the liquid. The first variable aspiration amount is added up in order from the first operation cycle, and at a time-point when a total amount is equal to or larger than the designated aspiration amount, the corresponding operation cycle is the last operation cycle.

For example, in FIG. 6, since the total amount reaches the designated aspiration amount at the fourth operation cycle, the number of executions of the operation cycle is four. According to such a determination method, the work of inputting the number of operation cycles by the user of the automatic analyzer is unnecessary, and the work is efficiently performed.

In the fourth operation cycle, the aspiration is ended at the time-point when the total amount already aspirated reaches the designated aspiration amount, and thus the aspiration amount in the fourth operation cycle is different from the first variable aspiration amount. Therefore, strictly speaking, the fourth operation cycle is not a normal operation cycle and may be referred to as a "correction operation cycle", for example. Accordingly, strictly speaking, the number of executions of the "normal operation cycle" itself is three.

In the present embodiment, the aspiration amount in the last correction operation cycle is automatically calculated based on the designated aspiration amount and a total of the amounts of aspiration in the preceding normal operation cycles. Therefore, the aspiration amount in the last correction operation cycle may be different from the first variable aspiration amount as illustrated. For example, in the example in FIG. 6, the first variable aspiration amount in the fourth operation cycle may be 15 µL. In the first to third normal operation cycles, the liquid is aspirated by the first variable aspiration amount, and in the fourth correction operation cycle, the aspiration amount is changed to 10 µL according to the designated aspiration amount.

After step S5, the automatic analyzer determines whether the operation cycle for the number of executions determined in step S1 is completed (step S5). If completed, the processing in FIG. 3 ends. If not completed, the processing returns to step S2, and the next operation cycle is started. Thus, the operation cycle is repeatedly executed until the aspiration of the designated aspiration amount is completed.

As described above, according to the automatic analyzer of the first embodiment of the invention, the possibility of air aspiration is reduced since the tip end of the sample aliquoting probe 105a is not exposed above the liquid level during aspiration. It is also possible to cope with various types of sample containers 101.

### [Second Embodiment]

In a second embodiment, the pushing amount in the last operation cycle in the first embodiment is changed. Hereinafter, description of parts common to the first embodiment may be omitted.

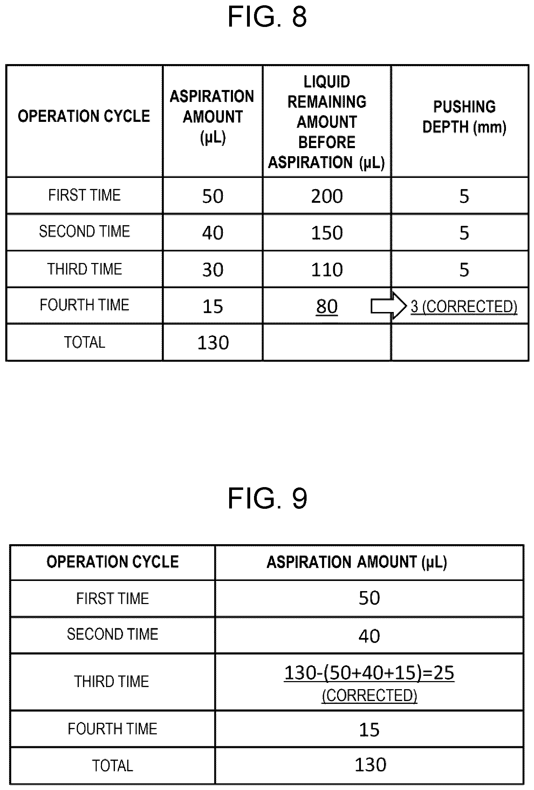

FIG. 8 shows a specific example of a first variable aspiration amount for each operation cycle in the second embodiment. A control method according to the second embodiment includes a correction operation cycle not included in the first embodiment, in addition to the normal operation cycle in the first embodiment. In particular, the correction operation cycle includes a correction lowering step in replacement with the lowering step of step S2.

The correction operation cycle is executed last. That is, the correction lowering step is executed by replacing the lowering step executed in the last normal operation cycle. In the example in FIG. 8, a fourth operation cycle is the correction operation cycle.

In the correction lowering step, the automatic analyzer lowers the sample aliquoting probe 105a in the liquid such that the distance from the liquid level of the liquid in the sample container 101 to the tip end of the sample aliquoting probe 105a is a fourth predetermined value (3 mm in the example in FIG. 8) different from the first predetermined value (5 mm in the example of FIG. 8). The fourth predetermined value is, for example, a value smaller than the first predetermined value.

The fourth predetermined value is determined according to the amount of the liquid in the sample container 101 immediately before the correction lowering step. The amount of the liquid in the sample container 101 can be acquired, for example, by subtracting the amount of the liquid already aspirated from an initial amount of the liquid (which can be input or measured in advance) before start of the first operation cycle.

A method for determining the fourth predetermined value can be appropriately designed, and can be defined in advance using a function or table based on the amount of the liquid, for example. For example, in the example in FIG. 8, as indicated by an underline, the fourth predetermined value is 3 mm when the amount of liquid is 80 µL.

According to such control, when the amount of liquid decreases (for example, in the vicinity of a dead volume of the sample container 101), it is possible to reduce the pushing amount, and thus it is possible to prevent the tip end of the sample aliquoting probe 105a from coming into contact with the bottom of the sample container 101.

### [Third Embodiment]

In a third embodiment, the aspiration amount in an operation cycle, which is not the last, in the first embodiment is changed. Hereinafter, description of parts common to the first embodiment may be omitted.

FIG. 9 shows a specific example of a first variable aspiration amount for each operation cycle in the third embodiment. In the third embodiment, a control method includes a correction operation cycle not included in the first embodiment, in addition to the normal operation cycle in the first embodiment. In particular, the correction operation cycle includes a correction aspiration step in replacement with the aspiration step of step S3.

In the present embodiment, the correction operation cycle (including the correction aspiration step) is executed by replacing the aspiration step executed in a normal operation cycle before the last normal operation cycle. In the example in FIG. 9, a third operation cycle is the correction operation cycle. Alternatively, a first or a second operation cycle can be the correction operation cycle.

In the correction aspiration step, the automatic analyzer aspirates the liquid by a second variable aspiration amount different from the first variable aspiration amount. The second variable aspiration amount is determined such that a cumulative aspiration amount up to the last (fourth) aspiration step is equal to a designated aspiration amount (130 µL).

In the example in FIG. 9, the correction aspiration step is included in the third operation cycle. Since a cumulative aspiration amount in the first, second, and fourth operation cycles is 50 + 40 + 15 = 105 [µL] and the designated aspiration amount is 130 µL, the second variable aspiration amount is 130 - 105 = 25 [µL] as indicated by an underline.

Thus, by adjusting the aspiration amount in an operation cycle that is not the last, the last operation cycle can be set as the normal operation cycle, that is, the first variable aspiration amount can be aspirated.

According to such control, since a larger amount of liquid can be left in the container immediately before the last operation cycle, the necessity of correcting the pushing amount in the last operation cycle as in the second embodiment is eliminated. In addition, since more liquid can be left in the sample container 101 immediately before the last operation cycle, the accuracy of the liquid level detection is improved.

### Reference Signs List

100 automatic analyzer
101 sample container (container)
102 sample conveyance unit
103 reagent container (container)
104 reagent disk
105 sample aliquoting unit
105a sample aliquoting probe (probe)
106 reagent aliquoting unit
106a reagent aliquoting probe (probe)
107 reaction disk
108 measurement unit
109 sample rack
110 cleaning tank (cleaning device)
111 reaction vessel
112 stirring unit
113 control device
120 sample (liquid)
130 liquid level detection device

All publications, patents, and patent applications cited in the present specification are incorporated into the present specification by citation as it is .

## Claims

1. A method for controlling an automatic analyzer that aspirates a liquid in a container using a probe, the method comprising:
a step of executing an operation cycle, wherein
the operation cycle is executed twice or more,
the operation cycle includes
a lowering step of lowering the probe into the liquid such that a distance from a liquid level of the liquid in the container to a tip end of the probe is a first predetermined value,
an aspiration step of aspirating the liquid by a first variable aspiration amount after the lowering step, and
a raising step of raising the probe such that the tip end of the probe is separated from the liquid level after the aspiration step,
the first variable aspiration amount is a value calculated such that, when the liquid is aspirated by the first variable aspiration amount in a container having the largest liquid level lowering amount among containers usable in the automatic analyzer, the tip end of the probe remains in the liquid, and a distance from a liquid level after the aspiration to the tip end of the probe is equal to or larger than a second predetermined value, and
in the raising step, the probe is raised such that a distance from the tip end of the probe to a liquid level after the raising is equal to or larger than a third predetermined value in a container having the smallest liquid level lowering amount among the containers usable in the automatic analyzer.

2. The method according to claim 1, further comprising:
a number-of-times determination step of determining the number of executions of the operation cycle, wherein
the number of executions is determined based on the first variable aspiration amount and a specified aspiration amount in the number-of-times determination step.

3. The method according to claim 1, wherein
the first predetermined value is a value at which a range in which an outer wall of the probe comes into contact with the liquid falls within a range in which the probe is cleanable in the automatic analyzer.

4. The method according to claim 1, further comprising:
a correction lowering step of lowering the probe into the liquid such that a distance from the liquid level of the liquid in the container to the tip end of the probe is a fourth predetermined value different from the first predetermined value, wherein
the correction lowering step is executed by replacing the lowering step executed in a last operation cycle, and
the fourth predetermined value is determined in accordance with an amount of the liquid in the container immediately before the correction lowering step.

5. The method according to claim 1, further comprising:
a correction aspiration step of aspirating the liquid by a second variable aspiration amount different from the first variable aspiration amount, wherein
the correction aspiration step is executed by replacing the aspiration step executed in an operation cycle before a last operation cycle, and
the second variable aspiration amount is determined such that a cumulative aspiration amount up to the last aspiration step is equal to a specified aspiration amount.

6. The method according to claim 1, wherein
the automatic analyzer includes a control device configured to control execution of the operation cycle.

7. The method according to claim 1, wherein
a plurality of types of containers having different shapes or sizes are usable in the automatic analyzer.

8. The method according to claim 1, wherein
the automatic analyzer includes a liquid level detection device configured to detect a position of a liquid level.

9. The method according to claim 8, wherein
the third predetermined value is a value that enables the liquid level detection device to detect a position of the liquid level after the raising step.

10. The method according to claim 3, wherein
the automatic analyzer includes a cleaning device configured to clean the probe.

11. An automatic analyzer comprising:
a probe, wherein
the automatic analyzer is configured to aspirate a liquid in a container using the probe, and
the automatic analyzer is configured to execute the method according to claim 1.
